# EUROPÄISCHE PATENTSCHRIFT

(11) **EP 0 999 357 B1**
(45) Veröffentlichungstag und Bekanntmachung des Hinweises auf die Patenterteilung: **03.09.2003**
(21) Anmeldenummer: 99890346.2
(22) Anmeldetag: 28.10.1999
(51) Int. Cl.: F02F 7/00

(54) **Verfahren zum Betreiben einer fremdgezündeten Viertakt-Brennkraftmaschine mit indirekter Kraftstoffeinspritzung**
Method of operating a spark ignited fourstroke engine with indirect injection
Procédé d'opération pour un moteur à quatre temps avec allumage par étincelle et injection indirecte

(30) Priorität: 05.11.1998 AT 71698 U
(43) Veröffentlichungstag der Anmeldung: 10.05.2000
(73) Patentinhaber: AVL List GmbH, 8020 Graz (AT)
(72) Erfinder: Kapus, Paul, Dr., 8045 Graz (AT); Mayerhofer, Ulrich, Dipl.-Ing., 8502 Lannach (AT)
(74) Vertreter: Babeluk, Michael, Dipl.-Ing. Mag.

(56) Entgegenhaltungen:
- EP-A- 0 764 773
- CH-A- 328 854
- FR-A- 2 734 316
- GB-A- 2 071 761
- US-A- 5 233 948

## Beschreibung

Die Erfindung betrifft ein Verfahren zum Betreiben einer fremdgezündeten Viertakt-Brennkraftmaschine mit indirekter Kraftstoffeinspritzung, mit mindestens einem durch ein Einlassventil gesteuerten, drallerzeugenden Einlasskanal und mindestens einem durch ein Auslassventil gesteuerten Austasskanal, wobei im Bereich des oberen Totpunktes des Ladungswechsels Kraftstoff in den Einlasskanal eingespritzt wird, wobei während der Einlassphase Kraftstoff in die Einlassströmung eingespritzt und eine Ladungsschichtung im Brennraum erzeugt wird, welche zumindest bis zum Einlassschluss im wesentlichen aufrechterhalten wird, wobei der Einspritzbeginn vorzugsweise nach dem oberen Totpunkt des Ladungswechsels liegt.

Ständig steigende Anforderungen an den Kraftstoffverbrauch und die Reduktion der Abgasemissionen, insbesondere der Kohlenwasserstoffe und der Stickoxide, erfordern den Einsatz neuer Technologien im Bereich der Verbrennungskraftmaschinen.

Ein wesentlicher Grund für den gegenüber zum Beispiel Dieselmotoren höheren spezifischen Kraftstoffverbrauch einer fremdgezündeten Brennkraftmaschine liegt in der Betriebsweise mit vorgemischtem homogenem Kraftstoff-Luftgemisch. Dies bedingt eine Regelung der Motorlast mit Hilfe eines Drosselorganes zur Begrenzung der insgesamt angesaugten Gemischmenge (Quantitätsregelung).

Diese Drosselung der Ansaugströmung führt zu einem thermodynamischen Verlust, der den Kraftstoffverbrauch der Verbrennungskraftmaschine erhöht. Das Potential zur Verbrauchsreduzierung der Verbrennungskraftmaschine bei Umgehung dieser Drosselung kann auf etwa 25% geschätzt werden. Ein Teil dieses Verbesserungspotentials kann genutzt werden, wenn im Teillastbereich eine Verringerung der Drosselung möglich wird.

Folgende Möglichkeiten zur Verringerung der Drosselverluste bei Ottomotoren sind bekannt:
*A) Magerbetrieb*
   a) homogen
   b) geschichtet (Zündkerze fett, Zylinderwand mager)
*B) Abgasrückführung*
*C) Frühes Schließen des Einlassventiles (variabler Ventilhub)*
*D) Spätes Schließen des Einlassventiles ("Miller-Cycle")*

Im Folgenden werden diese Verfahren bzw. deren Vor- und Nachteile beschrieben:
*A) Magerbetrieb:*
   a) homogen: bei gegebener Kraftstorfmenge ist eine Entdrosselung durch Erhöhung der Luftmenge (Abmagerung des Gemisches) möglich. Nun wird aber durch Abmagerung die Verbrennung verlangsamt, was zu einem niedrigeren thermodynamischen Wirkungsgrad führt. Um die Entdrosselung zu erhöhen sind also Maßnahmen erforderlich, die die Abmagerungsfähigkeit verbessern. Für die Einhaltung der Emissionsgrenzwerte ist für diesen Betrieb eine spezielle Abgasnachbehandlung für Stickoxide (DENOX-Katalysator) nötig.
   b) geschichtet: der Verlangsamung der Verbrennung kann auch durch Schichtung des Gemisches im Brennraum entgegengewirkt werden. Dabei wird versucht, in der Umgebung der Zündkerze zum Zeitpunkt der Entflammung ein fetteres Gemisch als im restlichen Brennraum zu erzielen. Bei Einspritzung ins Saugrohr ist es wegen des homogenisierenden Effektes der Ladungsbewegung nicht möglich, eine nennenswerte Schichtung zum Zündzeitpunkt aufrechtzuerhalten. Bei direkter Einspritzung des Kraftstoffes in den Brennraum kann bei Einspritzung kurz vor der Entflammung eine stabile, reproduzierbare Schichtung und damit ein ungedrosselter Betrieb erzielt werden. Auch bei diesem Verfahren muss zur Einhaltung der Emissionsgrenzwerte im Fahrzeug ein DENOX-Kat verwendet werden. Zusätzlich muss bei der kurzen zur Verfügung stehender Zeit zur Gemischbildung besonderes Augenmerk auf Rufbildung bzw. deren Vermeidung geachtet werden. Der technische Aufwand zur Realisierung einer direkten Einspritzung ist deutlich höher als bei einer Saugrohreinspritzung.
*B) Abgasrückführung (AGR):*
   Durch Rückführung von inertem Abgas ist ebenfalls, so wie beim Magerbetrieb, eine Entdrosselung möglich. Da das rückgeführte Abgas das Luft-Kraftstoffverhältnis nicht ändert, ist ein stöchiometrischer Betrieb und damit eine konventionelle Abgasnachbehandlung mit Dreiwegekatalysator möglich. Auch bei AGR-Zugabe verlangsamt sich die Verbrennung deutlich. Es treten die gleichen thermodynamischen Verluste wie bei Magerbetrieb auf. Durch selektive Zugabe des Abgases in der Nähe der Zylinderwand ist eine zusätzliche leichte Schichtung von Frischgas in der Nähe der Zylindermitte und Abgas an der Zylinderwand möglich. Eine Brennkraftmaschine mit mindestens zwei Einlassventilen bietet die Möglichkeit, dem Brennraum über getrennte Einlasskanäle unterschiedliche Gemischzusammensetzungen zuzuführen. Die Strömung im Zylinderraum kann mit Hilfe der Gestaltung der Einlassorgane des Motors derart beeinflusst werden, dass sich zum Zündzeitpunkt ein in der gewünschten Weise geschichtetes Gemisch im Zylinder befindet. Hierbei ist es besonders vorteilhaft, wenn sich der fettere (bei Luftzufuhr) bzw. der reinere (bei AGR) Gemischanteil in Zylindermitte im Bereich einer zentral angeordneten Zündkerze befindet, während zur Zylinderwand hin eine Abmagerung des Gemisches bzw. eine Zunahme der Abgaskonzentration vorzufinden ist.
*C) Frühes Schließen des Einlassventiles:*
   Durch Verwendung eines vollvariablen Ventilhubes ist es möglich, das Einlassventil bei ungeändertem Öffnungszeitpunkt deutlich früher zu schließen. Dadurch saugt der Motor nur so viel Luft (gegen geringeren Unterdruck) an, wie er für stöchiometrische Verbrennung benötigt. Die Drosselverluste sinken deutlich. Die Nachteile dieses Verfahrens sind der hohe technische Aufwand für die Realisierung des vollvariablen Ventilhubes und die Abkühlung des Kraftstoffes bei Expansion gegen das geschlossene Einlassventil. Da das Einlassventil sehr früh zumacht, ergeben sich bei der Abwärtsbewegung des Kolbens Ladungstemperaturen unter dem Gefrierpunkt.
*D) Spätes Schließen des Einlassventiles:*
   Eine weitere Alternative zur Entdrosselung ist das Ausschieben von gegen geringen Unterdruck zuviel angesaugter Luft. Dies geschieht durch sehr spätes Schließen des Einlassventiles, wenn der Kolben schon deutlich nach oben geht (Kompression). Das Problem bei dieser bekannten Variante des sogenannten "Miller-Cycle" ist, dass bei extrem spätem Schließen des Einlassventiles auch Kraftstoff, der vor oder während der Ansaugphase eingespritzt wird, wieder ausgeschoben wird. Der Grund liegt in der "Tumble" Ladungsbewegung, die bei konventionellen Motoren mit symmetrischen Einlasskanälen verwendet wird. Dabei wird eine Gemischwalze 90° zur Zylinderachse aufgebaut. Es bildet sich eine Aufwärtsströmung auf der Rückseite des Zylinders in Richtung Einlassventil. Dadurch kommt es zu Zylindermissverteilung bzw. zu nicht reproduzierbarer Gemischzusammensetzung.

Es sind zahlreiche Brennkraftmaschinen mit externer oder interner Abgasrückführung bekannt. Es sind auch Brennkraftmaschinen bekannt, bei denen der Einlassschluss verändert bzw. nach spät verstellt wird.

Aus der EP 0 764 773 A2 ist eine Brennkraftmaschine bekannt, bei der die Abgasrückführung in den Einlasssammler erfolgt. Dies hat allerdings den Nachteil, dass durch den Einlasssammler ein relativ großes Totvolumen gebildet wird.

Durch die dämpfende Wirkung des Totvolumens ist die Reaktionszeit des Abgasrückführsystems relativ langsam, wodurch nur relativ niedrige Abgasrückführraten im dynamischen Fahrbetrieb aus Fahrbarkeitsgründen möglich sind.

Andererseits ist aus der EP 0 764 773 A2 ein weiteres Abgasrückführsystem bekannt, bei dem die Abgasrückführung aus dem Auslasssystem direkt in einen von zwei Einlasskanälen pro Zylinder erfolgt. Bei dieser Ausführung können zwar große Totvolumina vermieden werden, allerdings ist eine gleichmäßige Rückführung des Abgases zu den einzelnen Zylindern nicht mehr gewährleistet.

Aus der AT 2 434 U1 ist eine fremdgezündete Brennkraftmaschine mit mehreren Zylindern und einer Einrichtung zur Ladungsverdünnung für Luft oder rückgeführtes Abgas bekannt, welche eine für alle Zylinder eine Reihe gemeinsame Verteilerleiste aufweist, in welche die Zuführleitung einmündet und welche über zumindest einen Verteilerkanal pro Zylinder mit einem Einlasskanal strömungsverbunden ist. Dadurch wird eine für alle Zylinder gleiche und hohe Ladungsverdünnung ermöglicht, wobei bei Abgasrückführung die Gasdynamik des rückgeführten Abgases nur unwesentlich gedämpft wird. Die Brennkraftmaschine weist dabei pro Zylinder einen Tangentialkanal zur Erzeugung einer Rotation der Zylinderladung um die Zylinderachse und einen Neutralkanal, welcher weder eine ausgeprägte Drallströmung noch eine Tumbleströmung hervorruft. Derartige Brennkraftmaschinen tolerieren hohe Abgasrückführmengen.

Auch aus der AT 402 535 B ist eine Brennkraftmaschine mit einem Neutralkanal und einem Tangentialkanal pro Zylinder bekannt, wobei Kraftstoff in beide Einlasskanäle über eine zwischen den Einlasskanälen angeordnete Einspritzeinrichtung eingebracht wird. Die beiden Einlasskanäle münden dabei in vordefinierten Winkeln in den Brennraum, so dass einerseits bei Teillast ein hoher Drall der Ladung erreicht wird ohne bei Volllast die Ladungseinströmung infolge schlechterer Durchflusswerte zu beeinträchtigen.

Die EP 0 764 773 A2 offenbart eine ähnliche Brennkraftmaschine mit jeweils in einen Zylinder mündenden Neutral- und Tangentialkanälen, wobei die Kraftstoffeinspritzung in den durch eine Drosseleinrichtung steuerbaren Neutralkanal erfolgt. Die Drosseleinrichtung ermöglicht im geschlossenen Zustand einen definierten Mindestdurchfluss. Mit dieser Ausbildung kann eine stabile radiale Gemischschichtung erreicht werden. Weiters wird in der EP 0 764 773 A2 eine externe Abgasrückführung zwischen Auslasskanal und dem Tangentialkanal gezeigt.

Zur Erzielung einer internen Abgasrückführung sind verschiedene Verfahren bekannt. Die DE 1 222 735 B beschreibt eine Brennkraftmaschine, bei der der Öffnungszeitpunkt des Einlassventiles weit in die Auslassperiode verschoben wird.

Aus der US 5,233,948 A ist ein Verfahren zum Betreiben einer Brennkraftmaschine mit mehreren Einlassventilen bekannt, wobei im Teillastbereich die Steuerzeit zumindest eines Einlassventiles um einen Kurbelwinkel von etwa 35° bis 40° nach spät verschoben wird. Dadurch können die Drosselverluste verringert werden und eine Restgasrückführung zur Absenkung der Stickoxidemissionen durchgeführt werden. Aus der Druckschrift gehen allerdings keine Maßnahmen hervor, um zu verhindern, dass bei extrem späten Schließen des Einlassventiles auch Kraftstoff, der vor oder während der Ansaugphase eingespritzt wird, wieder ausgeschoben wird.

Die DE 1 401 228 B zeigt einen Dieselmotor, bei dem Verbrennungsgase in das Ansaugsystem durch Veränderung der Steuerzeit der Auslass- und Einlassventile strömen.

Bei der DE 27 10 189 A1 wird eine interne Abgasrückführung durch verzögertes Schließen des Auslassventiles mittels Lagerbockhöhenverstellung des Kipphebellagers erreicht.

Die DE 21 25 368 A zeigt einen Viertaktmotor, bei dem das Auslassventil während des Ansaugtaktes kurz vor dem maximalen Einlassventilhub mittels eines Zusatznockens geöffnet wird.

Die DE 26 38 651 A offenbart eine Brennkraftmaschine, bei der das Auslassventil vor dem Schließen des Ansaugventiles und bei Stellung des Kolbens kurz vor Erreichen des unteren Totpunktes nochmals durch einen Zusatznocken geöffnet wird.

Aufgabe der Erfindung ist es, die genannten Nachteile zu vermeiden und ein Verfahren zu entwickeln, mit welchem bei einer fremdgezündeten Brennkraftmaschine mit Saugrohreinspritzung ein drosselarmer Teillastbetrieb auf möglichst einfache Weise erzielt werden kann. Insbesondere soll ein drosselarmer Teillastbetrieb ohne den vergleichsweise hohen Aufwand einer Direkteinspritzung oder eines vollvariablen Ventilhubes ermöglicht werden.

Erfindungsgemäß wird dies dadurch erreicht, dass bei Teillast die Einlasssteuerzeit um einen Kurbelwellen-Winkel von etwa 30° bis 100°, vorzugsweise etwa 40° bis 80°, nach spät verschoben wird, und dass das Einspritzende im Teillastbetrieb noch vor dem maximalen Einlasshub des Einlassventiles, vorzugsweise bei etwa 90° nach dem oberen Totpunkt des Ladungswechsels, erfolgt. Dadurch, dass das Einspritzende im Teillastbetrieb noch vor dem maximalen Einlasshub des Einlassventiles erfolgt, wird eine saugsynchrone Einspritzung zu ermöglicht. Dabei ist vorgesehen, dass die Ladungsschichtung durch einen Drall der Einlassströmung, vorzugsweise durch Abschaltung eines Kanales, erzeugt wird. Durch die saugsynchrone Einspritzung wird die Kraftstoffgemischwolke mit der Drallströmung während der Abwärtsbewegung des Kolbens in den Brennraum eingebracht und im Bereich des unteren Totpunktes des Kolbens eine Schichtung erzeugt, wobei die Kraftstoffgemischwolke in einer kolbennahen Schicht konzentriert ist. Diese temporäre Ladungsschichtung bewirkt, dass während des Ausschubtaktes der zuviel angesaugten Luft kein Kraftstoff zurück in den Einlasskanal geschoben wird. Das Ausschieben der zuviel angesaugten Luft erfolgt dabei gegen Umgebungsdruck, wenn die Brennkraftmaschine ungedrosselt betrieben wird.

Besonders günstig ist es, wenn bei Spätverstellung der Einlasssteuerzeit der Einlassschluss bei etwa 80° bis 150°, vorzugsweise bei etwa 90° bis 140° nach dem auf den Ladungswechsel folgenden unteren Totpunkt erfolgt. Es ist somit ein weitgehend ungedrosselter Betrieb ohne Direkteinspritzung, Schichtladung oder Magerbetrieb möglich. Dies hat den Vorteil, dass äußerst geringe Ladungswechselverluste und ein sehr günstiger Kraftstoffverbrauch erreichbar ist.

In einer besonders bevorzugten Ausführungsvariante der Erfindung ist vorgesehen, dass zumindest im Teillastbereich die Auslasssteuerzeit, vorzugsweise um einen Winkel von etwa 10° bis 30°, nach spät verschoben wird, so dass der Auslassschluss in den Bereich des Einlassbeginnes oder nach dem Einlassbeginn erfolgt. Durch die Verstellung der Auslasssteuerzeit nach spät wird vermieden, dass sich in der frühen Ansaugphase nahe dem oberen Totpunkt ein Ladungswechselverluste bewirkender Unterdruck einstellt, wenn die Einlasssteuerzeit nach spät verstellt wird. Gleichzeitig lässt sich durch das verspätete Schließen der Auslassventile eine interne Abgasrückführung in den Zylinderraum erzielen.

Es ist bekannt, dass mit verspätetem Einlassschluss ein entdrosselter Betrieb erreicht werden kann ("Miller-Cycle"). Dabei besteht allerdings die Gefahr, dass durch den verspäteten Schließpunkt der Einlassventile ein Teil des Kraftstoffes wieder in das Ansaugrohr geschoben wird. Dies wird beim erfindungsgemäßen Verfahren vermieden, indem die Kraftstoffeinspritzung saugsynchron erfolgt und das Kraftstoff-Luftgemisch in Form einer Drallströmung in den Brennraum gebracht und somit eine Ladungsschichtung erzeugt wird.

Die Steuerzeitverstellung erfolgt im Rahmen der vorliegenden Erfindung durch Verdrehen und/oder Verschieben der entsprechenden Einlass- bzw. Auslassnockenwelle, beispielsweise pneumatisch, hydraulisch, elektrisch oder mechanisch. Gegenüber einem vollvariablen Ventilhub, beispielsweise mittels elektrischer oder hydraulischer Ventilbetätigung, mit welchem ebenfalls ein drosselfreier Teillastbetrieb möglich wäre, hat die Steuerzeitverstellung durch Verdrehen oder Verschieben der Nockenwelle ("cam shifting") den Vorteil eines geringeren Herstellungs- und Steueraufwandes.

Das erfindungsgemäße Verfahren lässt sich besonders vorteilhaft bei einer fremdgezündeten Brennkraftmaschine mit indirekter Kraftstoffeinspritzung in zumindest einen Einlasskanal anwenden, welche einen Tangentialkanal und einen Neutralkanal pro Zylinder aufweist, wobei im Neutralkanal ein Steuerorgan angeordnet ist. Besonders günstig ist es, wenn die Brennkraftmaschine ein Einspritzventil aufweist, welches in beide Einlasskanäle einspritzt.

Die Erfindung wird im Folgenden anhand der Figuren näher erläutert.

Es zeigen:
- Fig. 1: ein Ventilhub-Kurbelwinkel-Diagramm,
- Fig. 2: die Einlassströmung während der Ansaugphase in einer schematischen Schrägansicht,
- Fig. 3: einen Schnitt durch einen Brennraum mit angedeuteter Ladungsbewegung während der Aufwärtsbewegung des Kolbens und
- Fig. 4: eine Draufsicht auf einen Zylinder dieser Brennkraftmaschine.

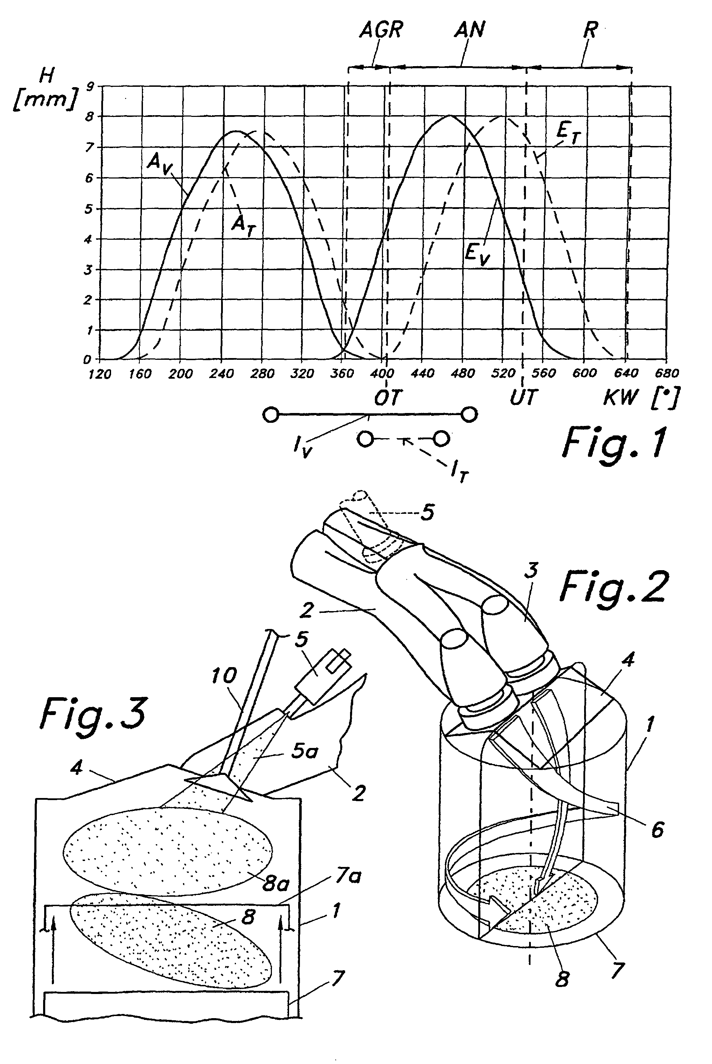

In dem in Fig. 1 dargestellten Diagramm ist der Ventilhub H über der Kurbelstellung KW in Grad Kurbelwinkel für Einlassventile und Auslassventile, jeweils für Vollastbetrieb und Teillastbetrieb, aufgetragen. Bezugszeichen E_{T} bezeichnet den Ventilhub H der Einlassventile bei Teillast, E_{V} den Ventilhub der Einlassventile bei Volllast. Der Ventilhub H der Auslassventile für Teillast bzw. für Volllast ist mit A_{T} bzw. A_{V} bezeichnet. Deutlich ist zu erkennen, dass bei Teillast die Steuerzeiten der Einlassventile und der Auslassventile nach spät verstellt werden, wobei die Spätverstellung der Einlassnockenwelle etwa 50° beträgt, so dass der Einlassschluss bei 90° bis 140° nach dem unteren Totpunkt UT nach dem Ladungswechsel liegt. Die Steuerzeitverstellung des Auslassventilhubes beträgt im Ausführungsbeispiel etwa 20° Kurbelwinkel nach spät. Durch die Verschiebung der Einlasssteuerzeit nach spät wird eine Entdrosselung bewirkt, so dass während der Ausschiebphase R die überflüssige Luft im Brennraum wieder in das Saugrohr gegen Umgebungsdruck rückgeblasen wird.

Da auch die Auslasssteuerzeit um einen Winkel von etwa 20° Kurbelwinkel nach spät verstellt wird, so dass der Schließzeitpunkt der Auslassventile nicht vor dem Öffnungszeitpunkt der Einlassventile liegt, wird erreicht, dass auch das Ansaugen während der Phase AGR gegen Umgebungsdruck (Abgasdruck) erfolgt. Dadurch treten äußerst geringe Ladungswechselverluste auf. Gleichzeitig erfolgt eine interne Abgasrückführung während der Phase AGR in den Zylinder. Während der Phase AN wird Luft bzw. Gemisch aus den Einlasskanälen angesaugt.

Mit I_{V} ist der Bereich der Einspritzung bei Volllast und mit I_{T} der Bereich der Einspritzung bei Teillast eingetragen.

Für das erfindungsgemäße Verfahren ist es wesentlich, dass der Kraftstoff in das Saugrohr saugsynchron eingespritzt wird, wobei der Einspritzbeginn nicht vor dem oberen Totpunkt OT des Ladungswechsels liegt. Zum anderen ist es von Bedeutung, dass die Gemischwolke mit dem Kraftstoff in einer Drallströmung in den Brennraum gebracht wird, so dass sich im Bereich des unteren Totpunktes UT nach dem Ladungswechsel im Bereich des Kolbens eine temporäre Gemischschichtung ausbildet, welche zumindest bis zum vollkommenen Schließen der Einlassventile aufrecht bleibt, wie aus den Fig. 2 und 3 ersichtlich ist.

Fig. 2 und 3 zeigen den Vorgang schematisch. Die abgebildete Brennkraftmaschine weist pro Zylinder 1 einen Tangentialkanal 2 und einen Neutralkanal 3 auf, welche über eine dachförmige Brennraumdecke 4 in den Zylinder 1 münden. In zumindest einem oder in beide Einlasskanäle 2, 3 wird Kraftstoff 5a über eine Einspritzeinrichtung 5 eingespritzt, welcher durch die Drallströmung 6 des Tangentialkanales 2 bei Abwärtsbewegung des Kolbens 7 in Form einer Gemischwolke 8 nach unten befördert wird. Im Bereich des unteren Totpunktes bildet sich eine temporäre Ladungsschichtung, so dass die Gemischwolke 8 nahe dem Kolben 7 bleibt. Während der durch die Pfeile 9 in Fig. 3 angedeuteten Aufwärtsbewegung des Kolbens 7 wird überflüssige Luft innerhalb des Zylinders 1 durch die Einlasskanäle 2, 3 wieder ausgeblasen. Bevor die Schicht mit der Gemischwolke 8 die Einlassventile 10 erreichen kann, werden diese wieder geschlossen, so dass kein Kraftstoff in die Einlasskanäle zurückgeschoben werden kann. In Fig. 3 ist die Stellung des Kolbens bei Einlassventilschluss mit 7a und die entsprechende Lage der Gemischwolke bei Einlassschluss mit 8a bezeichnet.

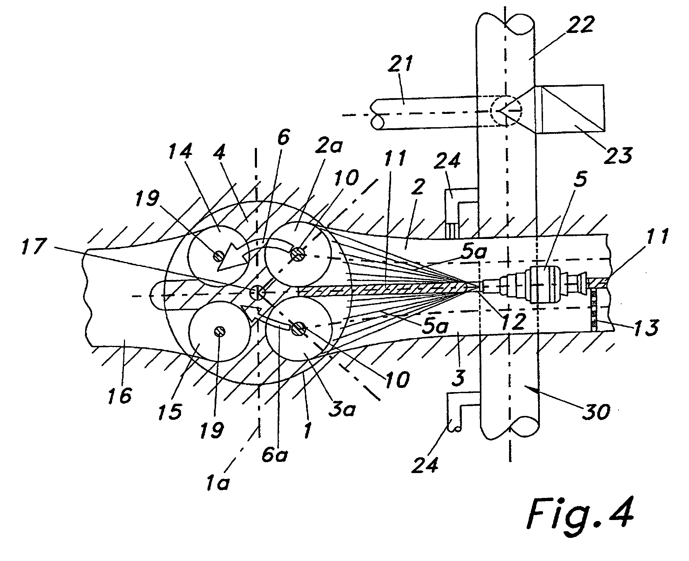

Fig. 4 zeigt eine Draufsicht auf einen Zylinder 1 einer Brennkraftmaschine, welche geeignet ist, das erfindungsgemäße Verfahren anzuwenden. Die Brennkraftmaschine weist ein Einlasssystem mit zwei von einem nicht weiter dargestellten Einlasssammler ausgehenden Einlasskanälen pro Zylinder 1 auf, von denen der eine als Tangentialkanal 2 und der andere als Neutralkanal 3 ausgebildet ist. Der Tangentialkanal 2 und der Neutralkanal 3 münden jeweils über eine Einlassöffnung 2a, 3a in den Brennraum des Zylinders 1, wobei jede Einlassöffnung 2a, 3a durch ein Ventil 10 gesteuert wird. Die Kanaltrennwand 11 zwischen dem Tangentialkanal 2 und dem Neutralkanal 3 weist nahe den Einlassöffnungen 2a, 3a eine Öffnung 12 auf, welche den Tangentialkanal 2 und den Neutralkanal 3 miteinander verbindet. Im Bereich dieser Öffnung 12 zwischen den beiden Einlasskanälen 2, 3 ist ein Einspritzventil 5 vorgesehen, welches zu den zwei Einlasskanälen 2, 3 so angeordnet ist, dass in jedem der beiden Einlasskanäle 2, 3 ein Kraftstoffstrahl 5a durch die definierte Öffnung 12 hindurch in Richtung der Einlassöffnungen 2a, 3a eingespritzt wird.

Im Neutralkanal 3 ist stromaufwärts der Öffnung 12 ein Steuerorgan 13, beispielsweise eine Drosselklappe oder ein Drosselschieber, angeordnet, welches im geschlossenen Zustand einen Mindestdurchfluss zwischen etwa 5% und etwa 20%, beispielsweise von etwa 10% des Maximaldurchflusses durch den Neutralkanal 3 ermöglicht.

Auf der der Einlassseite bezüglich der Motorlängsebene 1a gegenüberliegenden Seite sind in der durch den Zylinderkopf gebildeten dachförmigen Brennraumdecke 4 zwei Auslassöffnungen 14, 15 angeordnet, welche über Auslassventile 19 gesteuert werden. Von den Auslassöffnungen 14, 15 gehen Auslasskanäle 16 eines nicht weiter dargestellten Auslasssystems aus.

Das erfindungsgemäße Verfahren ermöglicht es, eine bestimmte Menge an Abgas intern rückzuführen. Reicht diese Abgasrückführung nicht aus, oder wird eine Ladungsverdünnung gewünscht, so kann eine in Fig. 4 angedeutete Einrichtung 30 zur Ladungsverdünnung vorgesehen sein, die eine für mehrere Zylinder 1 gemeinsame Verteilleiste 22 aufweist, in welcher eine Zuführleitung 21 einmündet. Die Verteilerleiste 22 ist über Verteilerkanäle 24 mit einem Einlasskanal 2 pro Zylinder 1 verbunden. Zur Steuerung des Zuflusses ist in der Zuführleitung 21 ein Ventil 23 vorgesehen, welches mit einem Schrittmotor ausgestattet sein kann, um eine schnelle und präzise Regelung zu erreichen.

Je nach dem, ob eine externe Abgasrückführung oder eine Ladungsverdünnung durch Zusatzluft gewünscht ist, ist die Zuführleitung 21 entweder mit einem Auslasskanal 16 oder mit einem Luftzuführsystem für reine Luft verbunden. In Fig. 4 ist mit Bezugszeichen 17 eine zentral angeordnete Zündkerze angedeutet. Der Pfeil 6 symbolisiert die in den Zylinder 1 eintretende Drallströmung, der Pfeil 6a die vom Neutralkanal 3 austretende drallneutrale Strömung.

Durch das erfindungsgemäße Verfahren ist ein weitgehend ungedrosselter Betrieb ohne Direkteinspritzung, Schichtladung oder Magerbetrieb möglich. Daher ergeben sich äußerst geringe Ladungswechselverluste und ein günstiger Kraftstoffverbrauch. Da zur Steuerzeitverstellung nur konventionelle Nockenwellen-Phasenverstelleinrichtungen verwendet werden können, ist im Vergleich zu einem voll variablen Ventilhub ein wesentlich geringerer Aufwand erforderlich.

## Patentansprüche

1. Verfahren zum Betreiben einer fremdgezündeten Viertakt-Brennkraftmaschine mit indirekter Kraftstoffeinspritzung, mit mindestens einem durch ein Einlassventil (10) gesteuerten, drallerzeugenden Einlasskanal (2) und mindestens einem durch ein Auslassventil (1) gesteuerten Auslasskanal, (16) wobei im Bereich des oberen Totpunktes des Ladungswechsels Kraftstoff in den Einlasskanal (2, 3) eingespritzt wird, wobei während der Einlassphase Kraftstoff in die Einlassströmung eingespritzt und eine Ladungsschichtung im Brennraum erzeugt wird, welche zumindest bis zum Einlassschluss im wesentlichen aufrechterhalten wird, wobei der Einspritzbeginn vorzugsweise nach dem oberen Totpunkt des Ladungswechsels liegt, **dadurch gekennzeichnet, dass** verglichen mit vollost bei Teillast die Einlasssteuerzeit um einen Kurbelwellen-Winkel von etwa 30° bis 100°, vorzugsweise etwa 40° bis 80°, nach spät verschoben wird, und dass das Einspritzende im Teillastbetrieb noch vor dem maximalen Einlasshub des Einlassventiles (10), vorzugsweise bei etwa 90° nach dem oberen Totpunkt des Ladungswechsels, erfolgt.

2. Verfahren nach Anspruch 1, **dadurch gekennzeichnet, dass** bei Spätverstellung der Einlasssteuerzeit der Einlassschluss bei etwa 80 bis 150°, vorzugsweise bei etwa 90 bis 140° nach dem auf den Ladungswechsel folgenden unteren Totpunkt erfolgt.

3. Verfahren nach Anspruch 1 oder 2, **dadurch gekennzeichnet, dass** die Ladungsschichtung durch einen Drall der Einlassströmung erzeugt wird.

4. Verfahren nach Anspruch 3 für eine Brennkraftmaschine mit zwei Einlasskanälen (2, 3) pro Zylinder, **dadurch gekennzeichnet, dass** der Drall der Einlassströmung durch Abschaltung eines Einlasskanales erzeugt wird.

5. Verfahren nach einem der Ansprüche 1 bis 4, **dadurch gekennzeichnet, dass** zumindest im Teillastbereich die Auslasssteuerzeit, vorzugsweise um einen Winkel von etwa 10° bis 30°, besonders vorzugsweise um etwa 20°, nach spät verschoben wird, so dass der Auslassschluss in den Bereich des Einlassbeginnes oder nach dem Einlassbeginn erfolgt.

6. Verfahren nach einem der Ansprüche 1 bis 5, **dadurch gekennzeichnet, dass** die Brennkraftmaschine ungedrosselt betrieben wird.

7. Verfahren nach einem der Ansprüche 1 bis 6, **dadurch gekennzeichnet, dass** die Verschiebung der Einlasssteuerzeit durch Verdrehen und/oder Verschieben der Nockenwelle erfolgt.

8. Anwendung des Verfahrens nach einem der Ansprüche 1 bis 7 bei einer fremdgezündeten Viertakt-Brennkraftmaschine, mit zumindest zwei Einlasskanälen (2, 3) pro Zylinder (1), mit indirekter Kraftstoffeinspritzung in zumindest einen Einlasskanal (2, 3), wobei ein Einlasskanal als Tangentialkanal (2) und ein Einlasskanal als Neutralkanal (3) ausgebildet ist, und wobei im Neutralkanal (3) ein Steuerorgan (13) angeordnet ist.

9. Anwendung nach Anspruch 8 für eine Brennkraftmaschine mit einem in beide Einlasskanäle (2, 3) einspritzenden Einspritzventil (5) pro Zylinder (1).

## Claims

1. A method for operating a spark-ignited, four-stroke internal combustion engine with indirect fuel injection, having at least one swirl-producing intake port (2) controlled by an intake valve (10) and at least one exhaust port (16) controlled by an exhaust valve (1), with fuel being injected into the intake port (2, 3) in the region of the upper dead centre of the gas exchange, with fuel being injected into the intake flow during the intake phase and a stratified charge being produced in the combustion chamber which is substantially maintained at least until the end of the intake, with the start of the injection preferably being after the upper dead centre of the gas change, **characterized in that** in comparison with full load the intake control time is displaced in the late direction by a crankshaft angle of approximately 30° to 100°, preferably approximately 40° to 80°, in partial load and that the end of the injection in partial-load operation occurs prior to the maximum intake stroke of the intake valve (10), preferably at approximately 90° after the upper dead centre of the gas change.

2. A method as claimed in claim 1, **characterized in that** in the case of late adjustment of the intake control time the intake end occurs at approx. 80 to 150°, preferably at approx. 90 to 140°, after the bottom dead centre following the gas change.

3. A method as claimed in claim 1 or 2, **characterized in that** the stratified charge is produced by a swirl of the intake flow.

4. A method as claimed in claim 3 for an internal combustion engine with two intake ports (2, 3) per cylinder, **characterized in that** the swirl of the intake flow is produced by cutting off one intake port.

5. A method as claimed in one of the claims 1 to 4, **characterized in that** at least in the partial-load region the exhaust control time is displaced in the late direction, preferably by an angle of approx. 10° to 30°, especially preferably by approx. 20°, so that the exhaust end occurs in the region of the start of the intake or after the start of the intake.

6. A method as claimed in one of the claims 1 to 5, **characterized in that** the internal combustion engine is operated in an unthrottled fashion.

7. A method as claimed in one of the claims 1 to 6, **characterized in that** the displacement of the intake control time occurs by turning and/or displacing the camshaft.

8. Application of the method as claimed in one of the claims 1 to 7 in a spark-ignited four-stroke internal combustion engine, comprising at least two intake ports (2, 3) per cylinder (1), indirect fuel injection in at least one intake port (2, 3), with one intake port being configured as a tangential port (2) and one intake port (3) as a neutral port, and with a control member (13) being arranged in the neutral port (3).

9. Application as claimed in claim 8 for an internal combustion engine with one injection valve (5) per cylinder (1) which injects into both intake ports (2, 3).

## Revendications

1. Procédé d'entraînement d'un moteur à combustion interne à quatre temps à allumage commandé avec injection indirecte de carburant, équipé d'au moins un canal d'admission (2) produisant un tourbillon commandé par une soupape d'admission (10) et d'un canal d'échappement (16) commandé par une soupape d'échappement (1) selon lequel, au niveau du point mort haut du changement de charge, du carburant est injecté dans le canal d'admission (2, 3), en injectant au cours de la phase d'admission du carburant dans le courant d'admission pour produire une stratification de charge dans la chambre de combustion, maintenue essentiellement au moins jusqu'à la fermeture de l'admission, l'injection commençant de préférence après le point mort haut du changement de charge,
**caractérisé en ce que**
pour une charge partielle, en comparaison à une charge complète, le temps de commande d'admission est décalé en retard d'un angle de vilebrequin compris entre 30° et 100°, de préférence compris entre 40° et 80°, et la fin de l'injection, lors du fonctionnement en charge partielle, a lieu encore avant la course d'aspiration maximale de la soupape d'admission (10), de préférence à environ 90 ° après le point mort haut du changement de charge.

2. Procédé selon la revendication 1,
**caractérisé en ce que**
lors du réglage tardif du temps de commande d'admission, la fermeture de l'admission s'effectue entre 80° et 150° environ, de préférence entre 90° et 140° après le point mort bas qui suit le changement de charge.

3. Procédé selon la revendication 1 ou 2,
**caractérisé en ce que**
la stratification de charges s'effectue à l'aide d'un tourbillon du courant d'admission.

4. Procédé selon la revendication 3 pour un moteur à combustion interne équipé de deux canaux d'admission (2, 3) par cylindre,
**caractérisé en ce que**
le tourbillon du courant d'admission se produit par coupure d'un canal d'admission.

5. Procédé selon l'une des revendications 1 à 4,
**caractérisé en ce qu'**
au moins dans la zone de charge partielle, le temps de commande d'échappement est décalé en retard de préférence d'un angle compris entre 10 ° et 30 °, en particulier de préférence d'environ 20 °, de sorte que l'échappement se produit lorsque l'admission commence ou après le début de l'admission.

6. Procédé selon l'une des revendications 1 à 5,
**caractérisé en ce que**
le moteur à combustion interne fonctionne sans étranglement.

7. Procédé selon l'une des revendications 1 à 6,
**caractérisé en ce que**
le décalage du temps de commande d'admission s'effectue par rotation et/ou déplacement de l'arbre à cames.

8. Application du procédé selon les revendications 1 à 7 dans un moteur à combustion interne à quatre temps à allumage commandé avec au moins deux canaux d'admission (2, 3) par cylindre (1) avec injection indirecte de carburant dans au moins un canal d'admission (2, 3), dans laquelle un canal d'admission est un canal tangentiel (2) et un canal d'admission est un canal neutre (3), avec un organe de commande (13) placé dans le canal neutre (3).

9. Application selon la revendication 8 dans un moteur à combustion interne équipé d'un injecteur (5) par cylindre (1) injectant dans les deux canaux d'admission (2, 3).
